# EUROPEAN PATENT APPLICATION

(11) **EP 4 797 654 A1**
(43) Date of publication of application: **26.08.2026**
(21) Application number: 24879074.3
(22) Date of filing: 17.10.2024
(51) Int. Cl.: H04L 51/04

(54) **IDENTIFIER DISPLAY METHOD AND APPARATUS, ELECTRONIC DEVICE, AND READABLE STORAGE MEDIUM**

(30) Priority: 17.10.2023 CN 202311345494
(71) Applicant: Beijing Zitiao Network Technology Co., Ltd., Beijing 100190 (CN)
(72) Inventor: JIANG, Huimin, Beijing 100028 (CN); ZHAO, Yuxuan, Beijing 100028 (CN); ZHOU, Zijun, Beijing 100028 (CN); CHEN, Shuyu, Beijing 100028 (CN)
(74) Representative: Grünecker Patent- und Rechtsanwälte PartG mbB
(86) International application number: PCT/CN2024/125445
(87) International publication number: WO 2025/082433

(57) **Abstract**

The disclosure discloses a method, an apparatus, an electronic device and a readable storage medium for displaying an identifier, and relates to the technical field of electronic devices. The method for displaying an identifier includes: displaying a first identifier on a session interface; and updating the first identifier to be a target identifier based on a session operation of at least two session objects in the session interface and displaying the target identifier, wherein a type of the target identifier matches with a type of the session operation, the at least two session objects are objects participating in a target session in the session interface, and the target identifier represents an interactive operation relationship associated with the target session.

## Description

The disclosure claims priority to Chinese Patent Application No. 202311345494.2, filed on October 17, 2023, the entirety of which is incorporated herein by reference.

### FIELD

The disclosure relates to a method, an apparatus, an electronic device and a readable storage medium for displaying an identifier.

### BACKGROUND

With the development of Internet communication technologies, users increasingly use instant messaging applications for sessional chat.

### SUMMARY

The embodiments of the disclosure provide a method, an apparatus, an electronic device, and a readable storage medium for displaying an identifier.

In a first aspect, embodiments of this application provide a method for displaying an identifier, comprising: displaying a first identifier on a session interface; and updating the first identifier to be a target identifier based on a session operation of at least two session objects in the session interface and displaying the target identifier, a type of the target identifier matching with a type of the session operation, the at least two session objects being objects participating in a target session in the session interface, the target identifier representing an interactive operation relationship associated with the target session.

In a second aspect, embodiments of this application provide an apparatus for displaying an identifier, comprising: a display module configured to display a first identifier on a session interface; and an updating module configured to update the first identifier to be a target identifier based on a session operation of at least two session objects in the session interface and display the target identifier, a type of the target identifier matching with a type of the session operation, the at least two session objects being objects participating in a target session in the session interface, the target identifier representing an interactive operation relationship associated with the target session.

In a third aspect, embodiments of this application provide an electronic device, comprising: a processor, a memory, and a program or instructions stored on the memory and can run on the processor, the program or instructions when executed by the processor implement the steps of the method based on the first aspect.

In fourth aspect, embodiments of this application provide a readable storage medium with a program or instructions stored thereon, wherein the program or instructions, when executed by a processor, implement steps of the method based on the first aspect.

In a fifth aspect, embodiments of the disclosure provide a chip. The chip comprises a processor and a communication interface. The communication interface is coupled to the processor. The processor is configured to run a program or instructions, so as to implement steps of the method for displaying an identifier based on the first aspect.

In a sixth aspect, embodiments of the disclosure provide a computer program product. The program product is stored in a storage medium, and the program product is executed by at least one processor to implement the method for displaying an identifier based on the first aspect.

### BRIEF DESCRIPTION OF THE DRAWINGS

Fig. 1 is a schematic flowchart of a method for displaying an identifier based on an embodiment of the disclosure;
Fig. 2 is a first schematic diagram showing a session interface provided in some embodiments of the disclosure;
Fig. 3 is a second schematic diagram showing a session interface provided in some embodiments of the disclosure;
Fig. 4 shows a schematic diagram of a session list provided in some embodiments of the disclosure;
Fig. 5 shows a schematic diagram of a desktop interface provided by some embodiments of the disclosure;
Fig. 6 is a third schematic diagram showing a session interface provided in some embodiments of the disclosure;
Fig. 7 is a structural block diagram of an apparatus for displaying an identifier based on an embodiment of the disclosure;
Fig. 8 is a structural block diagram of an electronic device based on some embodiments of the disclosure; and
Fig. 9 shows a schematic structural diagram of hardware of an electronic device based on some embodiments of the disclosure.

### DETAILED DESCRIPTION

The following clearly describes the technical solutions in the embodiments of the disclosure with reference to the accompanying drawings in the embodiments of the disclosure. Apparently, the embodiments to be described are merely a part rather than all of the embodiments of the disclosure. All other embodiments obtained by a person of ordinary skill in the art based on the embodiments of the disclosure shall belong to the scope of protection of the disclosure.

The terms "first" and "second" in the description and claims of the disclosure are used for distinguishing similar objects, but are not used for describing a specific sequence or order. It should be understood that the terms used in this manner may be interchangeable under appropriate circumstances, so that the embodiments of the disclosure may be implemented in an order other than what is shown or described herein. In addition, the objects distinguished by "first" and "second" are generally of a type, and do not limit the number of objects, for example, the first object may be one or more. Further, the expression "and/or" in the description or the claims represents at least one of the connected objects, and the character "/" generally indicates that the associated objects are in an "or" relationship.

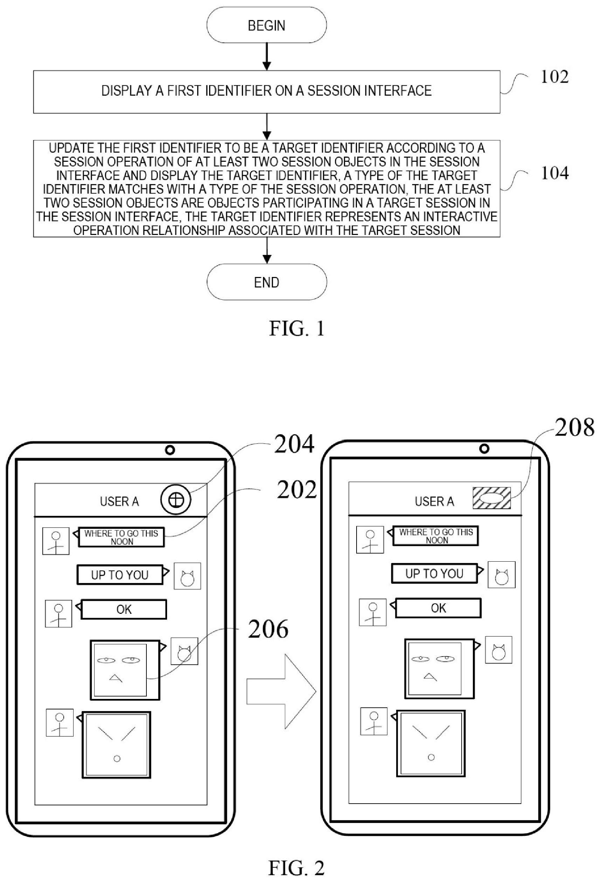

The method for displaying identifiers, the apparatus for displaying identifiers, the electronic device and the readable storage medium based on the embodiments of the disclosure will be described in detail below with reference to Figs. 1 to 9 through specific embodiments and application scenarios thereof.

Embodiments of the disclosure provide a method for displaying an identifier. Fig. 1 is a schematic flowchart of a method for displaying an identifier provided by an embodiment of the disclosure. As shown in Fig. 1, the method for displaying an identifier comprises:
step 102, displaying a first identifier on a session interface;
In the embodiments of the disclosure, a session interface is an interface for a local user to perform a session operation with other session objects. The session interface may be a one-to-one private chat session interface, or may be a group chat session interface. The first identifier is an identifier displayed in the session interface, and the first identifier is an identifier displayed when the session interface satisfies the predetermined condition.

For example, if the number of session messages in the session interface exceeds a first threshold within a predetermined duration, the first identifier is displayed in the session interface. A range of the predetermined duration is from 1 to 7 days, and a range of the first threshold is from 5 to 50. For example, in accordance with a determination that the number of messages in the session interface within a day exceeds 20, the first identifier is displayed in the session interface.

In the embodiment of the disclosure, the first identifier may be displayed at any position in the session interface, so as to help the user to quickly learn the type of the interactive operation and the interactive operation relationship in the session interface.

For example, the first identifier is displayed at the top of the session interface. For example, the first identifier is displayed at a position adjacent to the session object identifier of the session interface.

Step 104, updating the first identifier to be a target identifier based on a session operation of at least two session objects in the session interface and displaying the target identifier, wherein a type of the target identifier matches with a type of the session operation, the at least two session objects are objects participating in a target session in the session interface, the target identifier represents an interactive operation relationship associated with the target session.

In the embodiments of the disclosure, for the session operation between at least two session objects in a session interface, the first identifier is updated to be a target identifier based on the type of the session operation, and the target identifier matches with the type of the detected session operation, so that a user can determine an interactive operation relationship existing in the current session interface by viewing the target identifier.

Fig. 2 is a first schematic diagram of a session interface based on some embodiments of the disclosure. As shown in Fig. 2, session messages 202 sent by a session object and a current user are displayed in the session interface, the number of session messages 202 exceeds 20 in a day, and there are two continuous emoticon information 206 in the session messages 202. At this time, the first identifier 204 is displayed at the top of the session interface. After the session object and the current user perform a session operation of a specified type, for example, a video call, the first identity 204 is updated to the target identity 208.

For example, the target identifier may be an identifier obtained by updating the display parameter of the first identifier. For example, the target identifier is obtained by adjusting the color of the first identifier when the first identifier is updated.

For example, the target identifier may be another identifier different from the first identifier. For example, when the first identifier is updated, an identifier of another different shape is used as the target identifier, the display of the first identifier is cancelled, and the target identifier is displayed at the original position of the first identifier.

In the embodiments of the disclosure, when there are a large number of session messages in a session interface, a first identifier is displayed in the session interface, which helps a user quickly learn the type of an interactive operation and an interactive operation relationship in the session interface. For a session operation on a session interface with a first identifier displayed, the first identifier is updated based on different session operations. The updated target identifier matches with the session operation, so that the user can determine the type of the chat in the session window based on the updated target identifier. Thus, the display effect of the session interface is enriched, and the user can quickly learn the type of the interactive operation in the session interface conveniently through the target identifier. This improves the convenience for the user to distinguish different session interfaces.

In some embodiments of the disclosure, updating the first identifier to be a target identifier based on a session operation of at least two session objects in the session interface and displaying the target identifier comprises:
determining a display parameter of the target identifier based on the type of the session operation; and
displaying the target identifier on the session interface based on the display parameter.

In the embodiments of the disclosure, a display parameter of the target identifier is determined based on the type of a session operation in a target session. For example, the type of the session operation comprises performing a voice call or a video call between at least two session objects. The type of the session operation further comprises a message satisfying a predetermined condition in the target session between the at least two session objects, sending a message satisfying a predetermined condition may comprise sending a message of predetermined type and/or the number of predetermined type of messages sent within a predetermined duration reaching a threshold value. The predetermined type of message may be, for example, media resources sent by at least two session objects, emojis sent by at least two session objects, and the media content in the application shared by at least two session objects. In some embodiments, the predetermined type of message may also comprise all types of session messages among session members.

For example, the type of a session operation corresponds to the display parameter of a target identifier on a one-to-one basis, and the display parameter of the target identifier may be determined based on a mapping relationship between the display parameter and the type of the session operation.

In the embodiments of the disclosure, the type of a session operation is obtained, so that a display parameter of a displayed target identifier may be determined. In addition, the target identifier in a session interface is displayed based on the determined display parameter, so that the matching between the display parameter and the type of the session operation may be ensured. Thus, a user may further quickly learn the type of an interactive operation and an interactive operation relationship in the session interface.

In some embodiments of the application, the display parameter comprises at least one of: an identifier shape parameter, an identifier size parameter, an identifier color parameter, an identifier brightness parameter, an identifier fuzziness parameter or an identifier dynamic effect parameter.

In the embodiments of the disclosure, target identifiers corresponding to different types of session operations have different display parameters. Among different target identifiers, one of an identifier shape parameter, an identifier size parameter, an identifier color parameter, an identifier brightness parameter, an identifier fuzziness parameter, and an identifier dynamic effect parameter is different.

For example, the first target identifier is an identifier corresponding to a voice call or a video call between the at least two session objects, and the first target identifier is a lightning identifier. The second target identifier is a message satisfying a predetermined condition sent by the at least two session objects in a session, and the second target identifier is a flame identifier. That is, the identifier shape parameters of the first target identifier and the second target identifier are different.

In the embodiment of the disclosure, the identifiers corresponding to the different session operations are set as an identifier with at least different one of the shape parameter, color parameter, brightness parameter and fuzziness parameter, so that the difference between the identifiers corresponding to the different session operations can be improved, and the user can be further assisted in quickly learning the types of the session operations and the interactive operation relationship in the session interface.

In some embodiments of the disclosure, the method for displaying an identifier further comprises: in response to the first identifier being updated to be the target identifier, updating the first identifier of a target interface to be the target identifier, the target interface comprising another interface in a current application different from the session interface.

In the embodiments of the disclosure, the current application is an application program corresponding to a session interface displaying a target identifier, and the application program not only displays the session interface, but also displays other interfaces. After the first identifier in the session interface of the current application is updated to be the target identifier and is displayed, the first identifiers in other interfaces are all displayed as the target identifiers.

For example, the current application comprises the session interface, and further comprises a session list interface and a widget interface displayed on the desktop. Multiple session identifiers are displayed on the session list interface, and different session interfaces may be entered through different session identifiers. The widget interface displayed on the desktop is a widget interface displayed on the desktop of the terminal device, and different session interfaces may be entered through different widgets displayed on the desktop. After the first identifier in the session interface is updated to be the target identifier, the first identifier in other interfaces corresponding to the current application is synchronously updated to be the target identifier.

It should be noted that the target interface may be an interface displayed in the same screen as the session interface, for example, a session object detail interface triggered to be displayed in the session interface by performing an operation input. The target interface may also be an interface displayed in a different screen from the session interface, for example, a session list interface corresponding to the session interface.

In the embodiments of the disclosure, after the first identifier in the session interface is updated to be the target identifier, the first identifier in the target interface of the current application displaying the first identifier may be synchronously updated to be the target identifier. In a way that the first identifier in the target interface corresponding to the session interface in the current application is updated synchronously, the consistency of an updated target identifier is improved, and a user may be assisted in quickly learning the type of a session operation and an interactive operation relationship in a session interface in different interfaces.

In some embodiments of the disclosure, updating the first identifier to be a target identifier based on a session operation of at least two session objects in the session interface and displaying the target identifier further comprises:
updating a display parameter of an interface element in the session interface based on a display parameter of the target identifier.

In the embodiments of the disclosure, in the process of updating the first identifier to be the target identifier, the display parameter of the interface element in the session interface is synchronously updated based on the display parameter of the target identifier, so that the interface element of the updated session interface matches with the display parameter of the target identifier.

For example, the display parameter of an interface element comprises an interface color parameter. When the target identifier is a green identifier, all interface elements in a session interface are displayed in green.

For example, the display parameter of the interface element comprises an interface shape parameter. When the outline shape of the target identifier is a dotted line, the outline shape of the interface element in the session interface is also a dotted line.

For example, the display parameter of the interface element further comprises an interface brightness parameter, an interface fuzziness parameter, and an interface dynamic effect parameter.

It should be noted that the interface elements comprise but are not limited to a session bubble, a session window, and a function control.

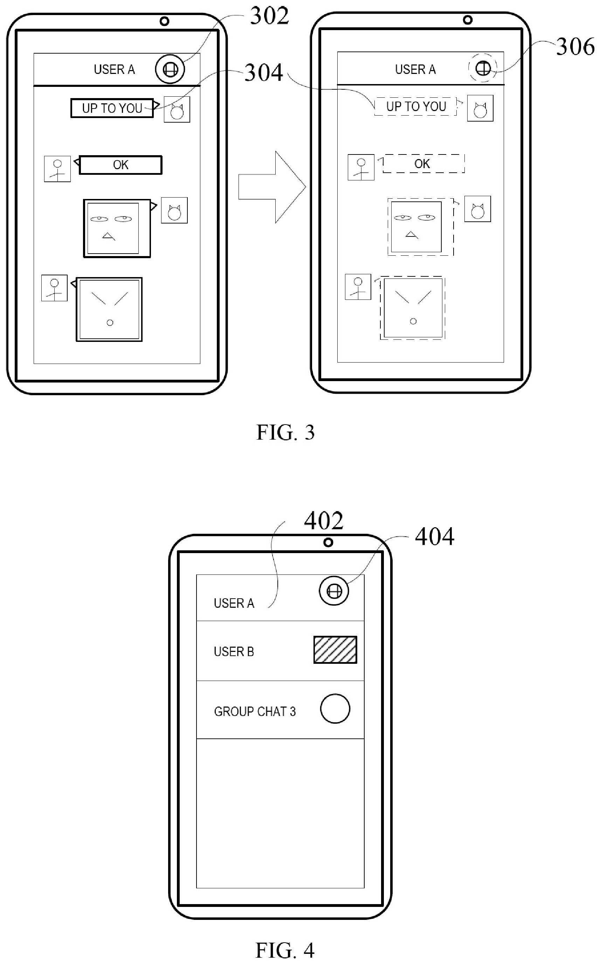

Fig. 3 is a second schematic diagram showing a session interface provided in some embodiments of the disclosure. As shown in Fig. 3, the session interface displays a first identifier 302 and a session bubble 304, and outline shapes of the first identifier 302 and the session bubble 304 are solid lines. After the first identifier 302 in the session interface is updated to be the target identifier 306, the outline shape of the target identifier 306 is dotted line, and the outline shape of the session bubble 304 is also updated to be dotted line.

In the embodiments of the disclosure, in the process of updating the first identifier in the session interface to be the target identifier, the display parameter of the interface element in the session interface can be updated based on the updated display parameter of the target identifier. The display parameter of interface element in the session interface is updated synchronously with the display parameter of target identifier, thereby the visibility of the display effect is further improved.

In some embodiments of the disclosure, updating the first identifier to be a target identifier based on a session operation of at least two session objects in the session interface comprises at least one of:
in response to the session operation comprising performing a voice call or a video call between at least two session objects, determining a first target identifier as the target identifier;
in response to the session operation comprising sending a message satisfying a predetermined condition in the target session between the at least two session objects, determining a second target identifier as the target identifier.

In the embodiments of the disclosure, a session operation comprises performing a voice call or a video call between at least two session objects; and after a session operation of the voice call or the video call is detected, a first identifier is updated to be a first target identifier corresponding thereto.

In the embodiments of the disclosure, a session operation comprises sending a message satisfying a predetermined condition between at least two session objects; and after a session operation of the message satisfying the predetermined condition is detected, updating a first identifier to be a second target identifier corresponding thereto.

It should be noted that, when the target session comprises the foregoing two session operations, an identifier corresponding to a session operation that occurs last time or first time may be used as the target identifier. For example, when a target session comprises a voice call and sending a message satisfying a predetermined condition, because the voice call is closer to the current moment, a first target identifier is determined as a target identifier.

For example, the message satisfying the predetermined condition comprises, but is not limited to, a picture message, a video message, an emoticon message, and the like.

In the embodiments of the disclosure, display parameters of a first target identifier and a second target identifier are different.

For example, the identifier color parameters of the first target identifier and the second target identifier are different. As an example, the first target identifier is a green identifier, and the second target identifier is a gold identifier. For example, the identifier shape parameters of the first target identification and the second target identification are different. As an example, the first target identifier is of a star shape, and the second target identifier is of a flame shape. In the embodiments of the disclosure, when session operations performed by at least two session objects in a session interface are different, different target identifiers may be unlocked, so that a user can determine a session operation type of a current session interface by viewing different target identifiers in different session interfaces, thereby further helping the user quickly learn a type of an interactive operation and an interactive operation relationship in the session interface.

In some embodiments of the present disclosure, in response to the session operation comprising sending a message satisfying a predetermined condition in the target session between the at least two session objects, determining a second target identifier as the target identifier comprises at least one of:
in response to the session operation comprising mutually sending a media resource between the at least two session objects, determining a second identifier as the second target identifier;
in response to the session operation comprising sharing a media content between the at least two session objects, determining a third identifier as the second target identifier.

In the embodiment of the disclosure, the session operation corresponding to the second target identifier comprise mutually sending a media resource between the at least two session objects. After the session operation of mutually sending the media resource is detected, the first identifier is updated to be the second identifier corresponding thereto. The media resource may be at least one of an image resource, a video resource, or a text file resource uploaded by the session object.

In the embodiments of the disclosure, a session operation corresponding to a second target identifier comprises sharing media content between at least two session objects; and after a session operation of mutually sending the media content is detected, a first identifier is updated to be a third identifier corresponding thereto. The media content may be content such as a video work, an image-text work and so on created by another user and shared by the session object, and may also be a browsing link of a video work, an image-text work and so on created by another user.

In the embodiment of the disclosure, the types of the same type of session operations may also correspond to sub-identifiers of different parameters, and different sub-identifiers may be different in identifier size parameters, identifier color parameters, identification brightness parameters, identifier fuzziness parameters, and identifier dynamic effect parameters.

For example, because the first target identifier and the second target identifier respectively correspond to two types of session operations, identifier shape parameters of the first target identifier and the second target identifier are set to be different. The second identifier and the third identifier in the second target identifier correspond to different messages satisfying a predetermined condition, therefore the identifier color parameters of the second identifier and the third identifier are set to be different.

For example, when the session operation comprises a voice call or a video call between session objects, the target identifier is the first target identifier, such as a green dot identifier. When the session operation comprises sending a picture resource between session objects, the target identifier is the second identifier in the second target identifier, such as a golden flame; and when the session operation comprises sending a browsing link of a video work between session objects, the target identifier is the third identifier in the second target identifier, such as a purple flame.

In the embodiments of the disclosure, when the messages satisfying a predetermined condition sent by at least two session objects in a session interface are different, the different identifiers can be taken as the second target identifier, so that a user can determine the different messages that satisfies the predetermined condition in the current session interface by viewing different second target identifiers in different session interfaces, helping the user quickly know about the types and relationships of interactive operations within the session interface.

In some embodiments of the disclosure, after updating the first identifier to be a target identifier based on a session operation of at least two session objects in the session interface and displaying the target identifier, the method further comprises:
receiving a first input to the session interface; and
in response to the first input, displaying the target identifier in a session unit of a session list interface, the session unit being configured for triggering the display of the session interface.

In the embodiment of the disclosure, the first input is an operation input for exiting the display of the current session interface, and the first input may be a gesture input executed on the session interface or an operation control therein, and may also be an input such as a voice input, which is not specifically limited herein.

In the embodiments of the disclosure, in response to the first input performed by a user on a session interface, a session list is displayed, in which a session unit corresponding to the session interface is displayed, and the session interface may be triggered for expanding and displaying by the session unit. A target identifier is displayed in a session chart, so that a user can distinguish the type of a session operation and the interactive operation relationship in different session interfaces in a session list by means of the target identifier displayed in each session unit.

Fig. 4 shows a schematic diagram of a session list provided in some embodiments of the disclosure. As shown in Fig. 4, a plurality of session units 402 are displayed in the session list, a target identifier 404 is displayed in the session unit 402, and the target identifier 404 matches a session operation in a session interface that can be triggered by the session unit 402 for display.

In the embodiments of the disclosure, by displaying a target identifier matched with a session operation in a session chart in a session list, a user can be assisted to quickly learn the type of an interactive operation and the interactive operation relationship in the session interface.

In some embodiments of the application, the method for displaying an identifier further comprises:
in response to the first identifier being updated to be the target identifier, triggering a target widget in the desktop interface of the terminal device where the current application is located to display the target identifier and/or first prompt information associated with the target identifier, the target widget being configured for triggering the display of the session interface.

In the embodiments of the disclosure, a target widget is a control displayed in a desktop interface of a terminal device, and the target is a widget of a current application corresponding to a session interface. A user can trigger the display of a session interface corresponding thereto by the target widget.

In the embodiments of the disclosure, when the first identifier in a session interface is updated and displayed as a target identifier, the target widget displayed on a desktop also displays a corresponding target identifier, and first prompt information associated with the target widget is displayed, wherein the first prompt information is configured for prompting a user to keep or update prompt information about the target identifier. It should be noted that, only the updated target identifier may be displayed in the target widget, or only the first prompt information associated with the target identifier may be displayed.

For example, the session operation in the session interface corresponding to the target widget is a voice call, then the target identifier is a green flame. The target widget displayed on the desktop interface of the electronic device displays the green flame, and the first prompt information that 'Chat keeps a green flame before 3:00 pm'.

For example, the target widget displayed on the desktop interface of the electronic device displays a gray flame, and the first prompt information that 'Chat restores a red flame before 3 p. m. '.

It should be noted that, there may be a plurality of target widgets displayed on the desktop interface, and target identifiers displayed in different target widgets may be different.

In the embodiments of the disclosure, when a first identifier in a session interface is updated and displayed as a target identifier, a target identifier is also synchronously displayed in a target widget displayed in a desktop interface, and prompt information for prompting a user to maintain or update the target identifier is displayed. Thus, in the desktop interface, the user may quickly learn the type of an interactive operation and the interactive operation relationship in the session interface.

In some embodiments of the disclosure, the target widget displays at least one of: identifier information of the session object, a fourth identifier or second prompt information, wherein the fourth identifier is configured for displaying an online state of the session object, and the second prompt information comprises at least one of: prompt information indicating an unread session message in the session interface, or prompt information indicating a receiving and sending frequency of a session message in the session interface.

In the embodiment of the disclosure, the target widget further displays the identifier information of the session object in a session interface, a fourth identifier indicating whether the session object is on-line, and the prompt information indicating an unread session message in the session interface, and prompt information indicating a receiving and sending frequency of a session message.

For example, the identifier information is used for displaying session object information in the target session, a head portrait icon, a nickname and the like of the session object. When the session object is in an online state, the fourth identifier is a green dot, and when the session object is in an offline state, the fourth identifier is a grey dot. When there is an unread session message in a session interface, the unread session message is displayed in a target widget; and when there is no unread session message in the session interface, the duration of a continuous chat is displayed in the target widget.

In the embodiments of the disclosure, the target widget displayed in the desktop displays the identifier information of the session object, the target identifier prompting a session operation, the fourth identifier indicating an online state of the session object, the second prompt information prompting a session message. It helps the user to quickly learn the type of interactive operation and the interactive operation relationship in the session interface in the desktop interface without accessing the session list or the session interface.

In the embodiment of the present disclosure, the method for displaying an identifier further comprises:
at least one of the target identifier, the first prompt information, the fourth identifier, or the second prompt information is displayed on a foreground of the target widget, and the message information of the target session and/or the identifier information of a target object in the target session is displayed on a background of the target widget.

In the embodiment of the disclosure, when a target widget is displayed on a desktop, at least one of a target identifier, first prompt information, a fourth identifier or second prompt information is displayed on a foreground of the target widget, and at least one of message information of a target session and identifier information of a target object is displayed on a background of the target widget.

In the embodiment of the disclosure, message information in a target session comprises, but is not limited to, a picture message, a video message, a text message, and an interaction component. The interaction component is, for example, a red envelope control, by which a red envelope sent by a session object can be received.

In the embodiment of the application, the target object is a session object participating in the target session, and the identifier information comprises but is not limited to the head portrait image, nickname information, etc. of the session object.

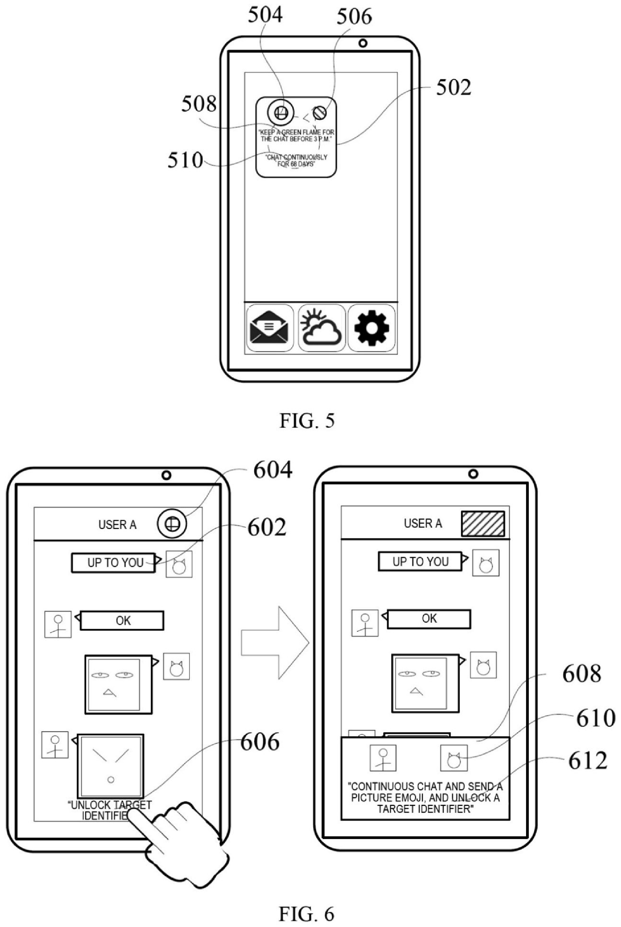

Fig. 5 shows a schematic diagram of a desktop interface provided in some embodiments of the disclosure. As shown in Fig. 5, a target widget 502 is displayed in the desktop interface, with the background of the target widget 502 being the head portrait image of the communication object, the foreground of the target widget 502 being the target identifier 504 and the fourth identifier 506, as well as the first prompt information 508 and the second prompt information 510. The first prompt information 508 is "keep a green flame for the chat before 3 p.m.", the second prompt information 510 is "chat continuously for 68 days", and the head portrait image is the identifier information of the target object.

In the present embodiment, by displaying at least one of the target identifier, the first prompt information, the fourth identifier, or the second prompt information in the foreground of the target widget on the desktop, and displaying at least one of the message information of the target session or the identifier information of the target object in the target session in the background of the target widget on the desktop, it is possible to ensure the richness of the displayed content of the target widget and improve the display effect of information in the target widget.

In some embodiments of this application, during updating the first identifier to be a target identifier based on a session operation of at least two session objects in the session interface and displaying the target identifier, the method further comprises:
displaying third prompt information matching with the session operation on the session interface;
receiving a second input for the third prompt information; and
displaying, in response to the second input, an identifier prompt panel in the session interface, the identifier prompt panel comprising identifier information of the at least two session objects and fourth prompt information, the fourth prompt information matching with the session operation.

In the embodiment of the disclosure, in the process of automatically updating the first identifier to be the target identifier based on the session operation, the third prompt information is displayed in the session interface, where the third prompt information is prompt information matching with the session operation.

It should be noted that the third prompt information is displayed on the session interface, and may specifically between the session messages. That is, a display position of the third prompt information is adjacent to a display position of the session message, so that the user may learn the target identifier unlocked by the current session operation in time.

In the embodiment of the disclosure, the second input is an operation input of the user for the third prompt information, and the second input may be a gesture input such as a click input and a slide input. A user executes a second input on a first prompt message, so that a display identifier prompt panel may be triggered and displayed in a session interface. The detailed information for unlocking the target identifier may be displayed in the identifier prompt panel. The detailed information comprises identifier information and fourth prompt information of at least two session objects. The identifier information may be icons such as head portrait images of the at least two session objects, and the fourth prompt information may be a detailed explanation of a target identifier, so that a user can know about detailed information of a currently-unlocked target identifier.

For example, the session operation is a voice call operation, and the third prompt information comprises "unlocking the target identifier", so as to prompt the user of a session corresponding to the session interface to unlock the corresponding target identifier. The second prompt information is detailed prompt information, and the fourth prompt information comprises "continuous chatting and sending a picture emoji, and unlocking a target identifier".

Fig. 6 shows a third schematic diagram of a session interface provided in some embodiments of the disclosure. As shown in Fig. 6, in the process of displaying a session message 602 and a target identifier 604 sent by a session object and a local user in the session interface, a first prompt message 606 is displayed below the latest session message in the session interface, where the first prompt message 606 is an "unlocking target identifier". The user clicks the first prompt message 606, an identifier prompt panel 608 is displayed in the session interface. The head portrait images 610 of all the session objects in the session interface are displayed in the identifier prompt panel 608, and a second prompt message 612 is displayed, showing "continuous chatting and sending a picture emoji, and unlocking a target identifier".

In the embodiment of the disclosure, in a process of updating a first identifier to be a target identifier, a first prompt message is displayed in a session interface, wherein the first prompt message may prompt a user that the session interface has unlocked a corresponding target identifier. A user executes a second input on a first prompt message, so as to trigger the deployment of display of the identifier prompt panel. A condition for unlocking the target identifier and identifier information of a session object for unlocking the target identifier may be displayed in the identifier prompt panel, so that the user can learn the detailed description for unlocking the target identifier.

The execution subject of the method for displaying an identifier provided by the embodiment of the disclosure may be an apparatus for displaying an identifier. In the embodiment of the disclosure, the method for displaying an identifier being executed by the apparatus for displaying an identifier is taken as an example to describe the apparatus for displaying an identifier provided in the embodiment of the disclosure.

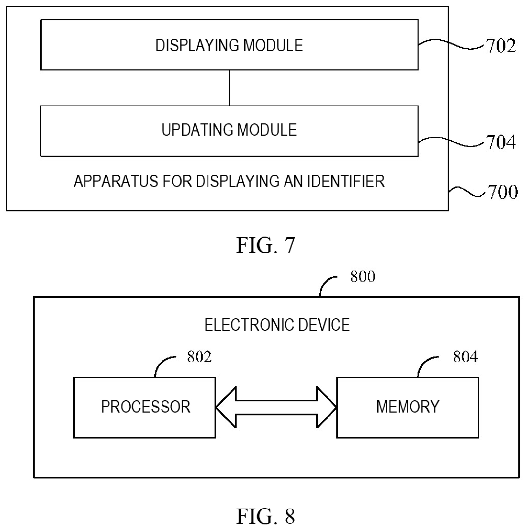

Some embodiments of the disclosure provide an apparatus for displaying an identifier. Fig. 7 is a structural block diagram of the apparatus for displaying an identifier provided by an embodiment of the disclosure. As shown in Fig. 7, the apparatus 700 for displaying an identifier comprises:
a displaying module 702 configured to display a first identifier on a session interface; and
an updating module 704 configured to update the first identifier to be a target identifier based on a session operation of at least two session objects in the session interface and display the target identifier, a type of the target identifier matching with a type of the session operation, the at least two session objects being objects participating in a target session in the session interface, the target identifier representing an interactive operation relationship associated with the target session.

In the embodiments of the disclosure, when there are a large number of session messages in a session interface, a first identifier is displayed in the session interface, which helps a user quickly learn the type of an interactive operation and an interactive operation relationship in the session interface. A session operation on a session interface with a first identifier displayed is detected, and the first identifier is updated based on different session operations. The updated target identifier matches with the interactive operation relationship of the target session, so that the user can determine the interactive operation relationship in the session window by viewing the updated target identifier. Thus, the display effect of the session interface is enriched, and the user can quickly learn the type of the interactive operation in the session interface conveniently through the target identifier. This improves the convenience for the user to distinguish different session interfaces.

In some embodiments of the disclosure, the apparatus for displaying an identifier further comprises: a determination module, configured to determine a display parameter of the target identifier based on the type of the session operation; and
a displaying module 702, configured to display the target identifier on the session interface based on the display parameter.

In the embodiments of the disclosure, by obtaining the type of a session operation, a display parameter of a displayed target identifier can be determined, and the target identifier is displayed in a session interface based on the determined display parameter, thereby the matching between the display parameter and the type of the session operation can be ensured. In such a way, a user may quickly learn the type of an interactive operation and an interactive operation relationship in the session interface.

In some embodiments of this application, the display parameter comprises at least one of: an identifier shape parameter, an identifier size parameter, an identifier color parameter, an identifier brightness parameter, an identifier fuzziness parameter or an identifier dynamic effect parameter.

In the embodiment of the disclosure, by setting the identifiers corresponding to the different session operations as the identifiers being different in at least one of the shape parameter, color parameter, brightness parameter or fuzziness parameter, the difference between the identifiers corresponding to the different session operations can be improved, and the user can be further assisted in quickly learning the types of the session operations and the interactive operation relationship in the session interface.

In some embodiments of this application, an updating module 704 is configured to: in response to the first identifier being updated to be the target identifier and being displayed, update the first identifier of a target interface to be the target identifier, the target interface comprising another interface in a current application different from the session interface.

In some embodiments of the disclosure, after the first identifier in the session interface is updated to be the target identifier, the first identifier in the target interface of the current application in which the first identifier is displayed can be synchronously updated to be the target identifier, so that the first identifier in the target interface corresponding to the session interface in the current application is updated synchronously. Thus, the consistency of updating target identifier is improved, and a user may be assisted to quickly learn the type of a session operation and an interactive operation relationship in a session interface in different interfaces.

In some embodiments of this application, the updating module 704 is configured to: update a display parameter of an interface element in the session interface based on a display parameter of the target identifier.

In embodiments of this application, in the process of updating the first identifier in the session interface to be the target identifier, the display parameter of the interface element in the session interface can be updated based on the updated display parameter of the target identifier. By updating synchronously the interface element display parameter in the session interface with the target identifier display parameter, the visibility of the display effect is further improved.

In some embodiments of this application, the determination module is configured to: in response to the session operation comprising performing a voice call or a video call between at least two session objects, determine a first target identifier as the target identifier; or
the determination module is configured to: in response to the session operation comprising sending a message satisfying a predetermined condition in the target session between the at least two session objects, determine a second target identifier as the target identifier.

In the embodiments of the disclosure, when session operations performed on at least two session objects in a session interface are different, different target identifiers can be unlocked. Thus, a user can determine a type of a session operation of a current session interface by viewing different target identifiers in different session interfaces, thereby further quickly learn a type of an interactive operation and an interactive operation relationship in the session interface.

In some embodiments of the disclosure, the determination module is configured to: in response to the session operation comprising mutually sending a media resource between the at least two session objects, determine a second identifier as the second target identifier; or
the determination module is configured to: in response to the session operation comprising sharing a media content between the at least two session objects, determine a third identifier as the second target identifier.

In the embodiments of the disclosure, when the messages satisfying a predetermined condition sent by at least two session objects in a session interface are different, different identifiers can be taken as second target identifier. Thus, a user can determine different messages satisfying a predetermined condition included in the current session interface by viewing different second target identifiers on different session interfaces, so as to quickly learn the type of an interactive operation and an interactive operation relationship in the session interface.

In some embodiments of this application, the apparatus for displaying an identifier further comprises:
a receiving module, configured to receive a first input to the session interface; and
the displaying module 702 configured to: in response to the first input, display the target identifier in a session unit of a session list interface, the session unit being configured for triggering the display of the session interface.

In the embodiments of the disclosure, by displaying a target identifier matched with a session operation in a session chart in a session list, a user can be assisted to quickly learn the type of an interactive operation and an interactive operation relationship in the session interface.

In some embodiments of this application, the displaying module 702 is configured to: in response to the first identifier being updated to be the target identifier, triggering a target widget in the desktop interface of the terminal device where the current application is located to display the target identifier and/or first prompt information associated with the target identifier, the target widget being configured for triggering the display of the session interface.

In embodiments of this application, when a first identifier in a session interface is updated to be a target identifier and is displayed, a target identifier is also synchronously displayed in a target widget displayed in a desktop interface, and prompt information for prompting a user to maintain or update the target identifier is displayed, so as to help the user in the desktop interface to also quickly learn the type of an interactive operation and an interactive operation relationship in the session interface.

In some embodiments of this application, the target widget displays at least one of: identifier information of the session object, a fourth identifier or second prompt information, wherein the fourth identifier is configured for displaying an online state of the session object, and the second prompt information comprises at least one of: prompt information indicating an unread session message in the session interface, or prompt information indicating a receiving and sending frequency of a session message in the session interface.

In the embodiments of the disclosure, the identifier information of a session object, a target identifier for prompting a session operation, a fourth identifier for prompting an online state of the session object or second prompt information for prompting a session message are displayed in a target widget displayed on a desktop. It helps the user to quickly learn the type of interactive operation and the interactive operation relationship in the session interface in the desktop interface without accessing the session list or the session interface.

In some embodiments of this application, the displaying module 702 is configured to: at least one of the target identifier, the first prompt information, the fourth identifier, and the second prompt information is displayed on a foreground of the target widget, and the message information of the target session and/or the identifier information of a target object in the target session is displayed on a background of the target widget.

In the embodiment of the disclosure, by displaying at least one of the target identifier, the first prompt information, the fourth identifier or the second prompt information in the foreground of the target widget on the desktop, and displaying at least one of the message information of the target session or the identifier information of the target object in the target session on the background of the target widget on the desktop, the richness of the display content of the target widget is ensured, and he display effect of the information in the target widget can also be improved.

In some embodiments of this application, the displaying module 702 is configured to display third prompt information matching with the session operation on the session interface;
the receiving module is configured to receive a second input for the third prompt information; and
the displaying module 702 is configured to: display, in response to the second input, an identifier prompt panel in the session interface, the identifier prompt panel comprising identifier information of the at least two session objects and fourth prompt information, the fourth prompt information matching with the session operation.

In embodiment of this application, in a process of updating a first identifier to be a target identifier, a first prompt message is displayed in a session interface, wherein the first prompt message can prompt a user that the session interface has unlocked a corresponding target identifier. A user executes a second input on a first prompt message, so as to trigger the deployment of a display identifier prompt panel; and a condition for unlocking the target identifier and identifier information of a session object for unlocking the target identifier can be displayed in the identifier prompt panel, so that the user can know about a detailed rule for unlocking the target identifier.

The apparatus for displaying an identifier in the embodiment of the disclosure may be an electronic device, and may also be a component in the electronic device, such as an integrated circuit or a chip. The electronic device may be a terminal, and may also be a device other than the terminal. For example, the electronic device may be a mobile phone, a tablet computer, a notebook computer, a palmtop computer, a vehicle-mounted electronic device, and a mobile Internet device (MID), augmented reality (AR)/virtual reality (VR) device, robot, wearable device, ultra-mobile personal computer (UMPC), a netbook, or a personal digital assistant (PDA), and the like, and may also be a server, a network attached storage (NAS), a personal computer (PC), a television (TV), a teller machine, a self-service machine, or the like, which is not specifically limited in the embodiment of the disclosure.

The apparatus for displaying an identifier in the embodiment of the disclosure may be an apparatus having an operating system. The operating system may be an Android operating system, an iOS operating system, or other possible operating systems, which is not specifically limited in the embodiment of the disclosure.

The apparatus for displaying an identifier provided by the embodiment of the disclosure can implement various processes implemented by the foregoing method embodiments, and to avoid repetition, details are not described herein again.

Optionally, the embodiments of the disclosure further provide an electronic device. Fig. 8 shows a block diagram of a structure of an electronic device based on some embodiments of the disclosure. As shown in Fig. 8, the electronic device 800 comprises a processor 802 and a memory 804, where the memory 804 stores a program or instructions that can run on the processor 802. The program or instructions, when executed by the processor 802, implement the steps of the foregoing method embodiments, and can achieve the same technical effect. To avoid repetition, details are not described herein again.

It should be noted that the electronic device in the embodiments of the disclosure comprises the foregoing mobile electronic device and non-mobile electronic device.

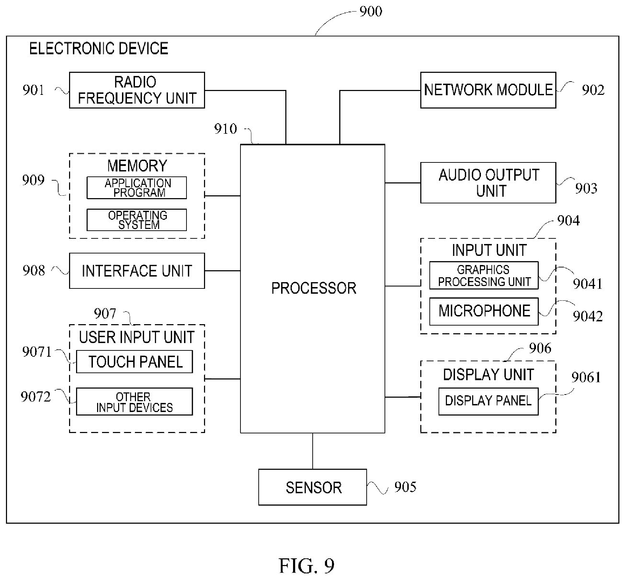

Fig. 9 shows a schematic structural diagram of hardware of an electronic device based on some embodiments of the disclosure.

The electronic device 900 comprises, but is not limited to, a radio frequency unit 901, a network module 902, an audio output unit 903, an input unit 904, a sensor 905, a display unit 906, a user input unit 907, an interface unit 908, a memory 909, and a processor 910, among other components.

Those skilled in the art can understand that the electronic device 900 may further comprise a power supply (such as a battery) for supplying power to each component. The power supply may be logically connected to the processor 910 through a power supply management system, so as to implement functions such as charging, discharging, and power consumption management through the power supply management system. The structure of the electronic device shown in Fig. 9 does not constitute a limitation to the electronic device. The electronic device may comprise more or less components than those shown in the figure, or may combine some components, or may have a different component arrangement, which is not described herein again.

The display unit 906 is configured to display a first identifier on a session interface;

The display unit 906 is configured to update the first identifier to be a target identifier based on a session operation of at least two session objects in the session interface and display the target identifier, wherein a type of the target identifier matches with a type of the session operation, the at least two session objects are objects participating in a target session in the session interface, the target identifier represents an interactive operation relationship associated with the target session.

In embodiments of this application, when there are a large number of session messages in a session interface, a first identifier is displayed in the session interface, which helps a user quickly learn the type of an interactive operation and a relationship of interactive operation in the session interface. For a session operation on a session interface with a first identifier displayed, the first identifier is updated based on different session operations. The updated target identifier matches with the interactive operation relationship of the target session, so that the user can determine the interactive operation relationship in the session window by viewing the updated target identifier. Thus, the display effect of the session interface is enriched, and the user can quickly learn the type of the interactive operation in the session interface conveniently through the target identifier. This improves the convenience for the user to distinguish different session interfaces.

Further, the processor 910 is used to determine a display parameter of the target identifier based on the type of the session operation; and
the display unit 906 is used to display the target identifier on the session interface based on the display parameter.

In the embodiments of the disclosure, by obtaining the type of a session operation, a display parameter of a displayed target identifier can be determined, and the target identifier is displayed in a session interface based on the determined display parameter, thereby the matching between the display parameter and the type of the session operation can be ensured. In such a way, a user may quickly learn the type of an interactive operation and an interactive operation relationship in the session interface.

Further, the display parameter comprises at least one of: an identifier shape parameter, an identifier size parameter, an identifier color parameter, an identifier brightness parameter, an identifier fuzziness parameter or an identifier dynamic effect parameter.

In the embodiment of the disclosure, by setting the identifiers corresponding to the different session operations as the identifiers being different in at least one of the shape parameter, color parameter, brightness parameter or fuzziness parameter, the difference between the identifiers corresponding to the different session operations can be improved, and the user can be further assisted in quickly learning the types of the session operations and the interactive operation relationship in the session interface.

Further, the display unit 906 is used to: in response to the first identifier being updated to be the target identifier and being displayed, update the first identifier of a target interface to be the target identifier, the target interface comprises another interface in a current application different from the session interface.

In some embodiments of the disclosure, after the first identifier in the session interface is updated to be the target identifier, the first identifier in the target interface of the current application in which the first identifier is displayed can be synchronously updated to be the target identifier, so that the first identifier in the target interface corresponding to the session interface in the current application is updated synchronously. Thus, the consistency of updating target identifier is improved, and a user may be assisted to quickly learn the type of a session operation and an interactive operation relationship in a session interface in different interfaces.

Further, the display unit 906 is used to: update a display parameter of an interface element in the session interface based on a display parameter of the target identifier.

In embodiments of this application, in the process of updating the first identifier in the session interface to be the target identifier, the display parameter of the interface element in the session interface can be updated based on the updated display parameter of the target identifier. By updating synchronously the interface element display parameter in the session interface with the target identifier display parameter, the visibility of the display effect is further improved.

Further, the process 910 is used to: in response to the session operation comprising performing a voice call or a video call between at least two session objects, determine a first target identifier as the target identifier; or
the processor 910 is used to: in response to the session operation comprising sending a message satisfying a predetermined condition in the target session between the at least two session objects, determine a second target identifier as the target identifier.

In the embodiments of the disclosure, when session operations performed on at least two session objects in a session interface are different, different target identifiers can be unlocked. Thus, a user can determine a type of a session operation of a current session interface by viewing different target identifiers in different session interfaces, thereby further quickly learn a type of an interactive operation and an interactive operation relationship in the session interface.

Further, the processor 910 is used to: in response to the session operation comprising mutually sending a media resource between the at least two session objects, determine a second identifier as the second target identifier; or
the processor 910 is used to: in response to the session operation comprising sharing a media content between the at least two session objects, determine a third identifier as the second target identifier.

In the embodiments of the disclosure, when the messages satisfying a predetermined condition sent by at least two session objects in a session interface are different, different identifiers can be taken as second target identifier. Thus, a user can determine different messages satisfying a predetermined condition included in the current session interface by viewing different second target identifiers on different session interfaces, so as to quickly learn the type of an interactive operation and an interactive operation relationship in the session interface.

Further, the user input unit 907 is used to receive a first input to the session interface; and
the display unit 906 is used to: in response to the first input, display the target identifier in a session unit of a session list interface, wherein the session unit is used to trigger the display of the session interface.

In the embodiments of the disclosure, by displaying a target identifier matched with a session operation in a session chart in a session list, a user can be assisted to quickly learn the type of an interactive operation and an interactive operation relationship in the session interface.

Further, the display unit 906 is used to: in response to the first identifier being updated to be the target identifier, trigger a target widget in the desktop interface of the terminal device where the current application is located to display the target identifier and/or first prompt information associated with the target identifier, wherein the target widget is used to trigger the display of the session interface.

In embodiments of this application, when a first identifier in a session interface is updated to be a target identifier and is displayed, a target identifier is also synchronously displayed in a target widget displayed in a desktop interface, and prompt information for prompting a user to maintain or update the target identifier is displayed, so as to help the user in the desktop interface to also quickly learn the type of an interactive operation and an interactive operation relationship in the session interface.

Further, the target widget displays at least one of: identifier information of the session object, a fourth identifier or second prompt information, wherein the fourth identifier is configured for displaying an online state of the session object, and the second prompt information comprises at least one of: prompt information indicating an unread session message in the session interface, or prompt information indicating a receiving and sending frequency of a session message in the session interface.

In the embodiments of the disclosure, the identifier information of a session object, a target identifier for prompting a session operation, a fourth identifier for prompting an online state of the session object and second prompt information for prompting a session message are displayed in a target widget displayed on a desktop. It helps the user to quickly learn the type of interactive operation and the interactive operation relationship in the session interface in the desktop interface without accessing the session list or the session interface.

Further, the display unit 906 is used to: at least one of the target identifier, the first prompt information, the fourth identifier, or the second prompt information is displayed on a foreground of the target widget, and the message information of the target session and/or the identifier information of a target object in the target session is displayed on a background of the target widget.

In the embodiment of the disclosure, by displaying at least one of the target identifier, the first prompt information, the fourth identifier or the second prompt information in the foreground of the target widget on the desktop, and displaying at least one of the message information of the target session or the identifier information of the target object in the target session on the background of the target widget on the desktop, the richness of the display content of the target widget is ensured, and he display effect of the information in the target widget can also be improved.

Further, the display unit 906 is used to display third prompt information matching with the session operation on the session interface;
the user input unit 907 is used to receive a second input for the third prompt information; and
the display unit 906 is used to: display, in response to the second input, an identifier prompt panel in the session interface, the identifier prompt panel comprising identifier information of the at least two session objects and fourth prompt information, the fourth prompt information matching with the session operation.

In embodiment of this application, in a process of updating a first identifier to be a target identifier, a first prompt message is displayed in a session interface, wherein the first prompt message can prompt a user that the session interface has unlocked a corresponding target identifier. A user executes a second input on a first prompt message, so as to trigger the deployment of a display identifier prompt panel; and a condition for unlocking the target identifier and identifier information of a session object for unlocking the target identifier can be displayed in the identifier prompt panel, so that the user can know about a detailed rule for unlocking the target identifier.

It should be understood that, in the embodiment of the disclosure, the input unit 904 may comprise a graphics processing unit (GPU) 9041 and a microphone 9042, and the GPU 9041 processes image data of a still picture or video obtained by an image capturing apparatus (for example, a camera) in a video capturing mode or an image capturing mode. The display unit 906 may comprise a display panel 9061 which may be configured in the form of a liquid crystal display, an organic light emitting diode, or the like. The user input unit 907 comprises at least one of a touch panel 9071 or another input device 9072. The touch panel 9071 is also referred to as a touch screen. The touch panel 9071 may comprise two parts: a touch detection apparatus and a touch controller. Other input devices 9072 may comprise, but are not limited to, a physical keyboard, a function key (such as a volume control key and a switch key), a trackball, a mouse, and a joystick, which are not described herein again.

The memory 909 may be used for storing a software program and various data. The memory 909 may mainly comprise a first storage area for storing a program or an instruction, and a second storage area for storing data. The first storage area may store an operating system, an application program or instructions required by at least one function (such as a sound playing function and an image playing function), and the like. In addition, the memory 909 may comprise volatile memory or non-volatile memory, or both. The non-volatile memory may be a read-only memory (ROM), a programmable ROM (PROM), an erasable PROM (EPROM), an electrically EPROM (EEPROM), or a flash memory. The volatile memory may be a random access memory (RAM), a static RAM (SRAM), dynamic RAM (DRAM), synchronous DRAM (SDRAM), double data rate SDRAM (DDRSDRAM), Enhanced SDRAM (ESDRAM), Synchronous link DRAM (SLDRAM) and direct Rambus RAM (DRRAM). The memory 909 in the embodiment of the disclosure comprises, but is not limited to, these and any other suitable types of memory.

The processor 910 may comprise one or more processing units. Optionally, the processor 910 integrates an application processor and a modem processor. The application processor mainly processes operations related to an operating system, a user interface, an application program, and the like, and the modem processor mainly processes a wireless communication signal, such as a baseband processor. It should be understood that the modem processor may also not be integrated into the processor 910.

Embodiments of the disclosure further provide a readable storage medium. The readable storage medium stores a program or instructions. The program or the instructions, when executed by a processor, implement the processes of the foregoing method embodiments for displaying an identifier, and the same technical effect may be achieved. To avoid repetition, details are not repeated herein.

The processor is the processor in the electronic device in the foregoing embodiments. The readable storage medium comprises a computer readable storage medium, such as a computer read-only memory ROM, a random access memory RAM, a magnetic disk, or an optical disc.

Embodiments of the disclosure further provide a chip. The chip comprises a processor and a communication interface. The communication interface is coupled to the processor. The processor is configured to run a program or instructions, so as to implement each process of the foregoing method for displaying an identifier, and can achieve the same technical effect. To avoid repetition, details are not repeated herein.

It should be understood that the chip mentioned in the embodiment of the disclosure may also be referred to as a system level chip, a system chip, a chip system, a system-on-chip chip, or the like.

Embodiments of the disclosure provide a computer program product. The program product is stored in a storage medium. The program product is executed by at least one processor to implement various processes of the foregoing method embodiments for displaying an identifier, and can achieve the same technical effect. To avoid repetition, details are not repeated herein.

It should be noted that, in this specification, the terms "comprise ", "contain" or any other variation thereof are intended to cover a non-exclusive inclusion, so that a process, a method, an article, or an apparatus that comprises a series of elements not only comprises those elements, but also comprises other elements that are not explicitly listed, or further comprises inherent elements of the process, the method, the article, or the apparatus. An element limited by "comprising a... " does not exclude that there are other same elements in the process, method, article, or apparatus that includes the element, without more limitations. In addition, it should be noted that the scope of the methods and apparatuses in the embodiments of the disclosure is not limited to performing functions in the order shown or discussed, and may also comprise performing functions in a substantially simultaneous manner or in a reverse order based on related functions, for example, the described methods may be performed in a different order from that described, and various steps may be added, omitted, or combined. Additionally, features described with respect to certain examples may be combined in other examples.

Through the description of the foregoing embodiments, a person skilled in the art may clearly understand that the method in the foregoing embodiments may be implemented by software in addition to a necessary universal hardware platform, and definitely may also be implemented by hardware. However, in many cases, the former is a preferred implementation. Based on such understanding, the technical solutions of the disclosure essentially or the part contributing to the prior art can be embodied in the form of a computer software product. The computer software product is stored in a storage medium (such as a ROM/RAM, a magnetic disk, and an optical disc), and comprises several instructions for instructing a terminal (which may be a mobile phone), a computer, a server, a network device, or the like.

The embodiments of the present disclosure have been described above with reference to the drawings, but the present disclosure is not limited to the above embodiments, The foregoing specific embodiments are merely exemplary rather than limiting, and persons of ordinary skill in the art can make various modifications and replacements without departing from the spirit and scope of the present invention. Many modifications may be made without departing from the spirit and scope of the claims, all of which belong to the protection scope of the disclosure.

## Claims

1. A method for displaying an identifier, comprising:
displaying a first identifier on a session interface; and
updating the first identifier to be a target identifier based on a session operation of at least two session objects in the session interface and displaying the target identifier, a type of the target identifier matching with a type of the session operation, the at least two session objects being objects participating in a target session in the session interface, the target identifier indicating an interactive operation relationship associated with the target session.

2. The method for displaying an identifier of claim 1, wherein updating the first identifier to be a target identifier based on a session operation of at least two session objects in the session interface and displaying the target identifier comprises:
determining a display parameter of the target identifier based on the type of the session operation;
displaying the target identifier on the session interface based on the display parameter.

3. The method for displaying an identifier of claim 2, wherein the display parameter comprises at least one of: an identifier shape parameter, an identifier size parameter, an identifier color parameter, an identifier brightness parameter, an identifier fuzziness parameter or an identifier dynamic effect parameter.

4. The method for displaying an identifier of any of claims 1-3, further comprising:
in response to the first identifier being updated to be the target identifier, updating the first identifier of a target interface to be the target identifier, the target interface comprising another interface in a current application different from the session interface.

5. The method for displaying an identifier of any of claims 1-4, wherein during updating the first identifier to be the target identifier based on a session operation of at least two session objects in the session interface and displaying the target identifier, further comprising:
updating a display parameter of an interface element in the session interface based on a display parameter of the target identifier.

6. The method for displaying an identifier of claim 1, wherein updating the first identifier to be a target identifier based on a session operation of at least two session objects in the session interface comprises at least one of:
in response to the session operation comprising performing a voice call or a video call between at least two session objects, determining a first target identifier as the target identifier;
in response to the session operation comprising sending a message satisfying a predetermined condition in the target session between the at least two session objects, determining a second target identifier as the target identifier.

7. The method for displaying an identifier of claim 6, wherein in response to the session operation comprising sending a message satisfying a predetermined condition in the target session between the at least two session objects, determining a second target identifier as the target identifier comprises at least one of:
in response to the session operation comprising mutually sending a media resource between the at least two session objects, determining a second identifier as the second target identifier;
in response to the session operation comprising sharing a media content between the at least two session objects, determining a third identifier as the second target identifier.

8. The method for displaying an identifier of any of claims 1-7, wherein after updating the first identifier to be the target identifier based on a session operation of at least two session objects in the session interface and displaying the target identifier, further comprising:
receiving a first input to the session interface; and
in response to the first input, displaying the target identifier in a session unit of a session list interface, the session unit being configured for triggering the display of the session interface.

9. The method for displaying an identifier of any of claims 1-8, further comprising:
in response to the first identifier being updated to be the target identifier, triggering a target widget to display the target identifier and/or first prompt information associated with the target identifier, the target widget being configured for triggering the display of the session interface, the target widget being provided by a terminal device associated with a current application.

10. The method for displaying an identifier of claim 9, wherein the target widget displays at least one of: identifier information of the session object, a fourth identifier or second prompt information, wherein the fourth identifier is configured for displaying an online state of the session object, and the second prompt information comprises at least one of: prompt information indicating an unread session message in the session interface, or prompt information indicating a receiving and sending frequency of a session message in the session interface.

11. The method for displaying an identifier of claim 10, further comprising:
at least one of the target identifier, the first prompt information, the fourth identifier, or the second prompt information is displayed on a foreground of the target widget, and the message information of the target session and/or the identifier information of a target object in the target session is displayed on a background of the target widget.

12. The method for displaying an identifier of any of claims 1-11, wherein during updating the first identifier to be the target identifier based on a session operation of at least two session objects in the session interface and displaying the target identifier, further comprising:
displaying third prompt information matching with the session operation on the session interface;
receiving a second input for the third prompt information; and
displaying, in response to the second input, an identifier prompt panel in the session interface, the identifier prompt panel comprising identifier information of the at least two session objects and fourth prompt information, the fourth prompt information matching with the session operation.

13. An apparatus for displaying an identifier, comprising:
a displaying module configured to display a first identifier on a session interface; and
an updating module configured to update the first identifier to be a target identifier based on a session operation of at least two session objects in the session interface and display the target identifier, a type of the target identifier matching with a type of the session operation, the at least two session objects being objects participating in a target session in the session interface, the target identifier representing an interactive operation relationship associated with the target session.

14. An electronic device, comprising:
a processor and a memory, the memory storing a program or instructions that can run on the processor, the program or instructions when executed by the processor implementing the steps of the method based on any of claims 1 to 12.

15. A readable storage medium with a program or instructions stored thereon, wherein the program or instructions, when executed by a processor, implement steps of the method based on any of claims 1 to 12.
